# EUROPEAN PATENT SPECIFICATION

(11) **EP 1 434 475 B1**
(45) Date of publication and mention of the grant of the patent: **28.02.2007**
(21) Application number: 02774651.0
(22) Date of filing: 26.09.2002
(51) Int. Cl.: A01C 15/00, A01D 33/10, A01D 41/12, A01D 75/02, A01B 73/00

(54) **METHOD FOR TRANSPORTING AND FILLING FREIGHT CONTAINERS**
VERFAHREN ZUM TRANSPORT UND FÜLLEN VON FRACHTCONTAINERN
PROCEDE DE TRANSPORT ET DE REMPLISSAGE DE CONTENEURS DE FRET

(30) Priority: 01.10.2001 US 969203
(43) Date of publication of application: 07.07.2004
(73) Proprietor: DEERE & COMPANY, Moline, IL 61265-8098 (US)
(72) Inventor: ZAUN, Richard, David, West Des Moines, IA 50265 (US); HOOK, Richard, Wayne, West Des Moines, IA 50265 (US); LONG, John, D., Ankeny, IA 50021 (US); OVERBEEKE, John, Urbandale, IA 50322 (US); WARMAN, Bruce, L., East Moline, IL 61244 (US); KNOTT, Gregory, M., Erie, IL 61250 (US); ROBINSON, John, M., Eagan, MN 55123 (US); KAY, Christopher, G., Roseville, MN 55113 (US); GUTERMAN, Mark, Apple Valley, MN 55124 (US); SPIVAK, Dmitry, I., Eagan, MN 55122 (US); SPARROW, Thomas, E., Hawley, MN 56549 (US); MADSON, John, A., Lake Park, MN 56554 (US); AMBUEHL, Jon, Hawley, MN 56549 (US)
(74) Representative: Holst, Sönke
(86) International application number: PCT/EP2002/010777
(87) International publication number: WO 2003/028433

(56) References cited:
- CH-A- 404 280
- DE-A- 2 658 820
- FR-A- 1 284 487
- FR-A- 2 372 716
- US-A- 3 742 686
- US-A- 4 120 413
- US-A- 4 385 483
- US-A- 5 104 613

## Description

### Field of the Invention

The present invention relates to a harvesting method comprising the steps of:
harvesting a crop in a field with a harvesting machine having an unloading conveyor for unloading the crop from the harvesting machine;
moving an intermodal freight container through the field and adjacent to the harvesting machine;
unloading the crop from the harvesting machine and depositing the crop in the freight container; and
subsequently moving the container from the field.

### Background of the Invention

Current grain production, transportation and handling systems are largely based on a bulk commodity approach. Harvesting machines, such as combines, are used to harvest many crops and also separate the grain, beans, seeds, etc. from the remainder of the plant material. The crop is off-loaded from the harvester into a grain cart, truck trailer, etc. and transported to a farm storage facility, local grain elevator, crop processor, etc. At the farm storage facility, the grain may be dried and stored in a bin for later use or transport from the farm. If delivered directly to a local elevator, the grain may be dried, cleaned, etc. and stored there. The crop is later transported by truck, rail or barge to a food processor or to a terminal elevator for transport overseas. The bulk commodity system is highly efficient at moving large quantities of crops. One draw back of the bulk commodity approach is the limited ability to differentiate crops based on various crop characteristics. For the most part, crops are graded and classified according to a board of trade classification. For example, much com is sold or graded as number two yellow com and meets the minimum characteristics established by the board of trade for that classification.

There are crop characteristics other than those used in the board of trade classifications that crop processors and food producers seek to utilize in food or other product production processes. Recent advances in plant science have produced crops having differentiated output traits, such as high oil crops. Other crops have been developed for certain pharmaceutical or nutriceutical properties. Biotechnology has used genetic modification to produce crops having certain specialized agronomic properties. While these genetically modified (GMO) crops provide benefits to the producer, some consumers prefer to avoid genetically modified food products. In response, many regulators have adopted, or are considering, regulations that require food products to be labeled to indicate the presence and/or absence of GMO ingredients. Other consumers desire food products that are produced organically. Organic food production largely avoids the bulk commodity system due to small volumes and the inability to properly segregate organically produced products from non-organically produced products.

For the various reasons described above, it is desirable to provide an alternative to the bulk commodity system. There is a need for a system that allows for segregation of crops having different characteristics while still providing efficient handling and transportation of these products.

One way to segregate crops and maintain the segregation throughout the transportation system is to ship crops in containers, such as intermodal freight containers. Once containerized, the products can be shipped to the processor without additional handling of the crop or opportunity for commingling with other crops. In addition to maintaining the segregation, containerized crops are handled fewer times, reducing handling induced grain damage. Currently, some crops are shipped in bulk containers. Most of these crops are placed in containers at elevators or processing facilities. While some crops have been containerized at the farm site, the lack of efficient and economical means for filling and handling containers on the farm prevents wide spread use of containers for transporting agricultural products such as grains, beans, seeds, etc.

US 4 385 483 A discloses a combine harvester with a hitch for pulling a cart for the road transport of a crop harvesting header.

CH 404 280 A describes a transportable container that can be used for transporting grain and mounted on a transport trailer.

US 5 104 613 A describes a truck carrying a tiltable truck dump bed and a hopper assembly comprising a conveyor. The material from the dump bed can be unloaded into the hopper assembly via a rear tailgate opening of the dump bed. The conveyor transports the material from the hopper to an elevated location, for example to a grain storage vessel or to another vehicle bed.

### Summary of the Invention

The present invention provides a harvesting method according to claim 1, inducing transporting and filling a freight container, such as an ISO standard intermodal container, at the point of harvest. The apparatus includes a chassis with either wheels or endless tracks. The chassis is adapted to support the freight container and also supports a hopper for receiving the crop (hereinafter "grain") from a harvesting machine, such as a combine. A conveyor moves the grain from the hopper and into the container. The container is filled through either an opening at the nose end of the container or through the container rear doors with a bulkhead installed inside the container. The bulkhead is open at the top, allowing the container to be filled over the bulkhead. The apparatus is pulled by a tractor or can be a self propelled vehicle.

In some embodiments, the apparatus includes lift arms to load and unload containers onto the chassis, thus giving the apparatus the capability of handling a container in addition to transporting the container. The lift arms can be used to move the container onto a semitrailer or to set the containers on the ground. In one embodiment, the apparatus has a two part chassis with the two parts connected by a fifth wheel hitch. In this arrangement, the front chassis carries the hopper and conveyor while the rear chassis carries the freight container. Multiple rear chassis are used with a single front chassis. After a container has been filled, the apparatus moves the container to the edge of the field or to a road adjacent to the field and uncouples the rear chassis carrying the full container. The rear chassis is adapted to be transported by a highway semi-tractor that takes the full container to a grain elevator, processor etc. There the full container is removed from the rear chassis and an empty container placed on the rear chassis for return to the field. In the preferred embodiment, the rear chassis is a standard highway container chassis. By utilizing a standard container chassis and semi-trailer, the container can be transported from the farm at highway transport speeds.

In a further embodiment, instead of highway axles and tires, fewer, larger tires are used for improved handling and maneuverability of the apparatus in a farm field.

The conveyor is a belt conveyor. The conveyor is inclined at an angle and operated at a speed necessary to throw the grain into the container at one end and reach the opposite end of the container. The grain travels along an arcuate trajectory through the container without striking the top of the container. This allows the container to be substantially filled without extending the conveyor into the container. By not extending the conveyor into the container, there is no need to coordinate withdrawal of the conveyor as the container is filled. In a preferred embodiment the conveyor is inclined at approximately a 15° angle and the belt is operated at about 11.2 m/s. At these operating parameters, it is possible to fill a 20-foot intermodal container in less than five minutes. Depending upon the grain and moisture, the container will reach its weight limit before it is filled by volume. The weight limit may not be the container weight limit but the weight limit for road transport of a filled container. The road weight limit depends on several factors, including the number and spacing of axles supporting the container. As used herein, the term "substantially filled", is either by weight or by volume.

### Brief Description of the Drawings

Fig. 1 is a side view of one embodiment of an apparatus attached to an agricultural tractor.
Fig. 2 is a perspective view of the distal end of the conveyor.
Fig. 3 is a fragmentary perspective view of the apparatus illustrating a container being unloaded from the apparatus.
Fig. 4 is a side view of an alternative embodiment of the apparatus.
Fig. 5 is a side view of another embodiment of the apparatus.
Figs. 6, 7, 8, and 9 show a sequence of the container being unloaded from the apparatus with the container being placed on a truck trailer in Fig. 8 and being placed on the ground in Fig. 9.
Fig. 10 is a rear perspective view of a container showing a bulkhead installed therein.
Fig. 11 is a side view of the apparatus of Fig. 5 supported on a track undercarriage.
Figs. 12 and 13 are top and side views of an alternative embodiment.
Figs. 14 and 15 are side and rear views of a further embodiment.
Fig. 16 is a side view of still another embodiment.

### Description of the Preferred Embodiment

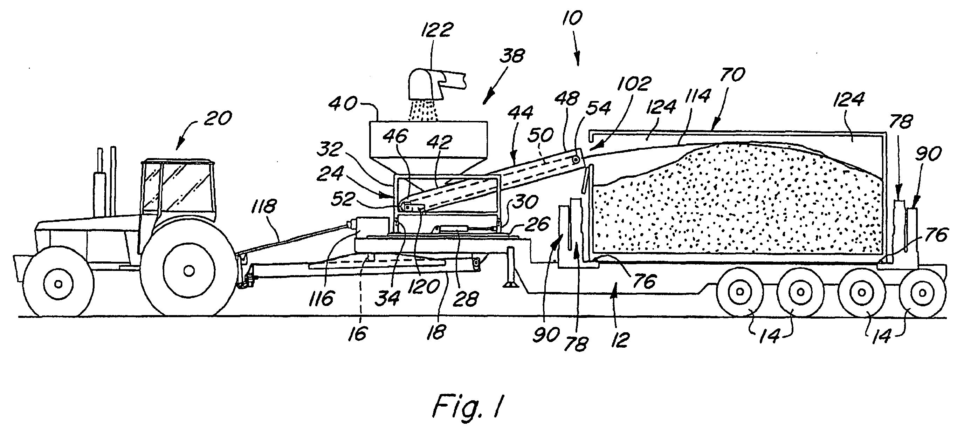

A first embodiment of the apparatus is shown in Fig. 1 and designated generally at 10. The apparatus 10 includes a chassis 12 supported by ground engaging elements, in this embodiment, wheels 14. The axles for the wheels 14 are common axles used in semitrailer and are suspended with a typical semitrailer suspension system. The chassis includes a fifth wheel hitch king pin 16 near the front end for towing the chassis 12 with a semi-tractor. As shown, a towing tongue 18 is mounted on the chassis 12 to tow the chassis 12 with an agricultural tractor 20.

The apparatus 10 includes a sub-frame 24 carried upon the chassis 12. The sub-frame 24 is coupled to the chassis 12 through a slide track mechanism 26 that enables the sub-frame 24 to be moved fore and aft relative to the chassis 12. A hydraulic cylinder 28 serves as an actuator to move the sub-frame 24 fore and aft. The sub-frame 24 includes a lower portion 30 and an upper portion 32. Removable fasteners, such as nut and bolt assemblies 34, removably attach the upper frame portion 32 to the lower frame portion. The removable fasteners allow the upper portion 32 to be removed the lower portion 30 for use elsewhere. A series of apertures in the sub-frame legs allows the position of the upper frame portion to be adjusted relative to the lower frame portion.

The sub-frame 24 supports a hopper 38. The hopper 38 has an open upper end 40 and a lower outlet 42. The sub-frame 24 further supports a belt conveyor 44 having a lower end 46 and an upper end 48. The conveyor 44 has a belt 50. The belt 50 is wrapped around lower and upper rollers 52, 54. Hydraulic motor 120 coupled to the lower roller 52 drives the belt 50. The hopper outlet 42 is disposed above the conveyor to allow grain to drop onto the belt 50. The belt carries the grain to the conveyor upper end 48. Between the conveyor ends, the belt is supported on an expanded metal trough 58. The trough allows more grain to be piled onto the belt without spilling off the belts side edges as compared to a flat belt. The belt flattens for travel over the rollers at the conveyor ends. The belt has upstanding cleats 60 that engage the grain to move the grain along with the belt. The cleats have side portions 62 parallel to the side edges of the belt to keep grain on the belt. Cleat portions 64 are inclined inwardly and rearwardly from the side portions 62. Center cleat portions 66 are spaced from the inner ends of the inclined cleat portions 64 and extend across the middle of the belt. The cleat portions 64, 66 engage the grain to move the grain along with the belt.

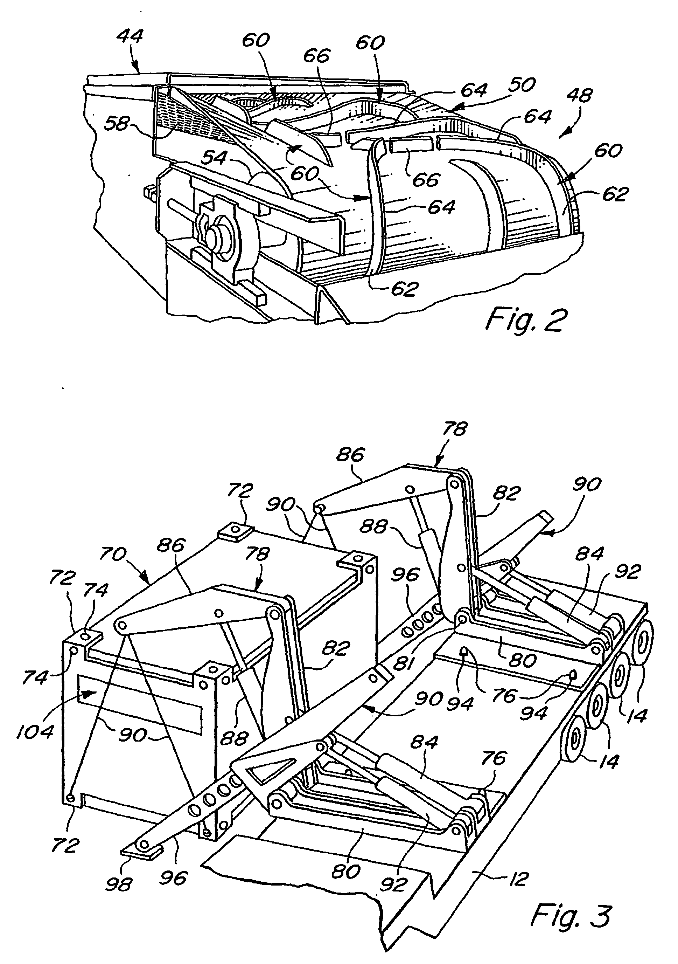

The chassis 12 is adapted to receive a freight container 70. The chassis 12 is shown as a conventional single drop container chassis for road transport with a semi-tractor. By utilizing a commonly available trailer chassis, the cost of the apparatus 10 is minimized. In the preferred embodiment, the freight container 70 is an intermodal freight container that meets ISO standards for intercontinental containers. In the embodiment shown, a 20-foot container is used. An ISO freight container has standard corner fittings 72 (Fig. 3) with apertures 74 on three sides to grab the container for handling. The chassis 12 includes standard twist lock pins 76 for engagement with the container bottom corner fittings to secure the container to the chassis 12.

The apparatus 10 is equipped with a pair of lift arms 78 for loading and unloading containers from the chassis 12. One arm is located at each end of the container. Each lift arm includes a base 80 attached to the chassis 12 a first arm member 82 rotatably mounted to the base 80 at pivot 81 and a second arm member 86 pivotally coupled to the distal end of the first arm member 82. The first arm member 82 is moved by a hydraulic cylinder 84 while the second arm member 86 is controlled by a hydraulic cylinder 88. Chains 90 extend downward from the distal ends of the second arm members 86 and are connected to the bottom corner fittings of the container 70. The lift arms 78 extend laterally to one side of the chassis 12 for picking up a container either from the ground or from a semitrailer adjacent to the chassis 12. Stabilizer arms 90 are also pivotally mounted to the base 80 and are each controlled by a hydraulic cylinder 92. The stabilizer arms 90 each include a first, outer, portion 94 and a telescoping portion 96 that extends outward from the first portion 94. Pads 98 at the ends of the telescoping portions 96 engage either the ground or an adjacent semitrailer. The stabilizer arms allow the lift arms 78 to load and unload containers laterally without tipping the chassis 12. The lift arms 78 and stabilizer arms 90 are commercially available from several sources including Steelbro Ltd. of Christchurch, New Zealand.

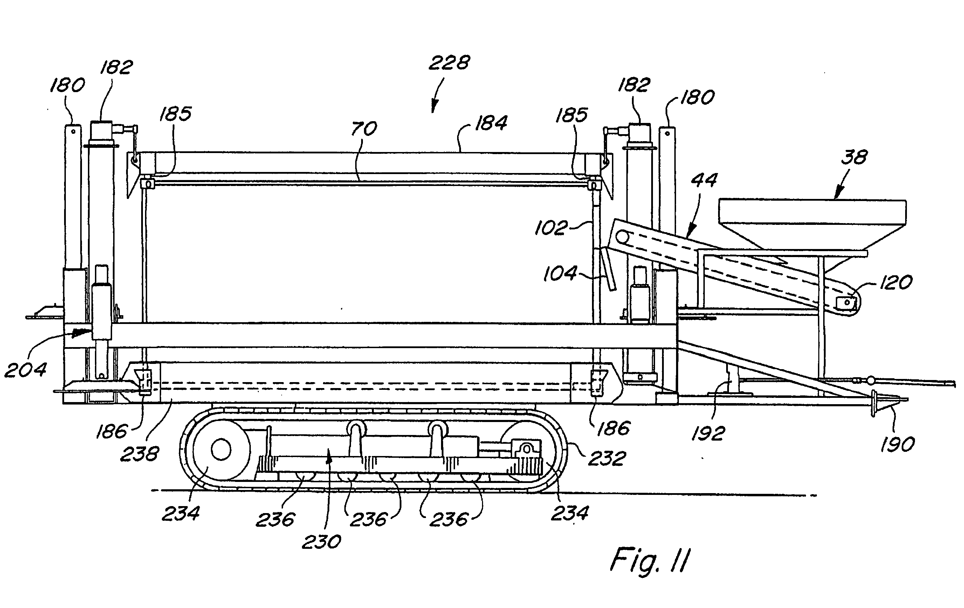

The container 70 includes a fill opening 102 at the front, or nose end, of the container. A door 104 is provided to close the opening 102. The container is placed on the chassis 12 so as to receive material to be loaded by the conveyor into the container through the opening 102. In the preferred embodiment shown, the conveyor 44 remains external to the container 70 with the distal end of the conveyor 48 adjacent to the opening 102. As an alternative to filling the container through the nose opening 102, the container can be filled through the rear as shown in Fig. 10. A bulkhead 106 is installed in the container immediately inside the container rear doors 108. The bulkhead 106 does not extend completely to the top of the container, leaving an opening 110 above the bulkhead through which the container can be filled. Bulkheads of this type are known devices; one such bulkhead is shown in U.S. Patent 6,206,623 B1. If the container is filled through the rear, the container must be placed on the chassis 12 with the rear adjacent the conveyor 44.

The slide track 26 allows the conveyor and hopper to be move forward when a container is being loaded or unloaded from the chassis 12. This is necessary to provide clearance between the conveyor and the front lift and stabilizer arms 78, 90 that operate immediately in front of the container, in the area of the conveyor distal end 48. The cylinder 28 is coupled to the cylinders of the lift and stabilizer arms to ensure that the conveyor is moved away from the lift and stabilizer arms prior to extension thereof. Mechanisms other than slide track 26 can be used to move the conveyor such as an extendable conveyor, a pivot mechanism, linkages, etc.

The conveyor is inclined and operated at a speed sufficient to throw grain along an arcuate path 114 into and through the container to the opposite end. The path 114 allows the grain to reach the opposite end of the container with little, or no, grain striking the top of the container. If grain strikes the top of the container, the grain will fall and form a pile in the middle of the container. This will prevent the container from being substantially filled. Substantial filling of the container is shown in Fig. 1 with only small spaces 124 at the front and rear of the container not filled. Complete volumetric filling of the container will likely result in the container exceeding weight limits for road transport. Testing has indicated that it may be possible to fill the container with belt speeds in the range of 8.6 to 11.7 m/s. In a preferred embodiment, the conveyor is inclined at approximately a 15° angle and is operated at a speed of about 11.2 m/s. This provides the necessary grain speed and trajectory to fill a 20-foot container. With a 24" wide belt, a 20-foot container can be filled in less than five minutes. Increasing the belt width can increase the fill rate. Since the belt rides in a trough, a 50% increase in belt width will produce more than a 50% increase in the fill rate. While different conveyor angles and speeds can be used to fill containers shorter or longer than a 20-foot container, it is believed that a 20-foot container is the optimal size. Larger containers would likely have significant empty volume when the highway weight limit is reached. Smaller containers would require a greater number of containers for a given harvest and more container handling.

Other types of conveyors may be used in place of the belt conveyor. One possibility is a pneumatic conveyor. However, a belt conveyor is preferred over a pneumatic conveyor due to the greater power requirements to operate a pneumatic conveyor at the desired fill rate.

The chassis 12 carries a power package 116 that includes a hydraulic pump. The tractor PTO drives the power package through a drive shaft 118. The hydraulic pump provides hydraulic fluid pressure to the conveyor motor 120, the hydraulic cylinder 28 and the lift and stabilizer arms 78, 90. If the tractor 20 can provide sufficient hydraulic flow, the hydraulic components of the apparatus 10 could be powered by the tractor hydraulic system, avoiding the need for a hydraulic pump on the apparatus 10. The power package 116 may also include an air compressor to release brakes on the wheels 14 and for air suspension components. The need for an air compressor on the apparatus 10 depends on whether the towing tractor is itself equipped with an air compressor. As an alternative to being driven by the tractor PTO, the power package 116 may include an engine to drive the pump and air compressor.

The apparatus 10 can be used during a harvesting operation as follows: Prior to harvesting, empty containers are delivered to the field. At the time of harvest, the apparatus 10 will load one of the empty containers and transport the container through the field to the combine or other harvesting machine. The harvesting machine unloads the grain into the hopper 38 from an unloading conveyor 122 of the harvesting machine. The conveyor moves the grain from the hopper into the container. Once the container 70 is filled, the apparatus is moved back to the side of the field where the full container is unloaded and an empty container is loaded onto the apparatus. The above process is then repeated. Depending upon the destination of the containers, it may be possible to transport full containers directly from the field to the destination before unloading the container from the apparatus 10. Regardless of whether the apparatus is used to transport containers to the edge of the field or elsewhere, the apparatus is used to transport empty containers into the field for filling and to transport full containers from the field.

While the preferred way to fill a container is shown and described above, containers can be filled by other means. For example, the conveyor could be extendable and arranged to extend into the container for dropping the grain at the opposite end. Such a conveyor would be gradually retracted as the container fills. The container may have multiple fill ports in the top and the conveyor arranged to extend to each port to fill the container. An open top container can be filled and covered later or used just to carry the grain to an elevator where it is dumped.

Load cells 94 are integrated into the pins 76 to measure the weight of the container as it is being filled. The load cells provide a signal to the operator of the container fill level. Other types of fill sensors may be used including suspension load sensors, ultra-sonic sensors, contact sensors in the container, etc.

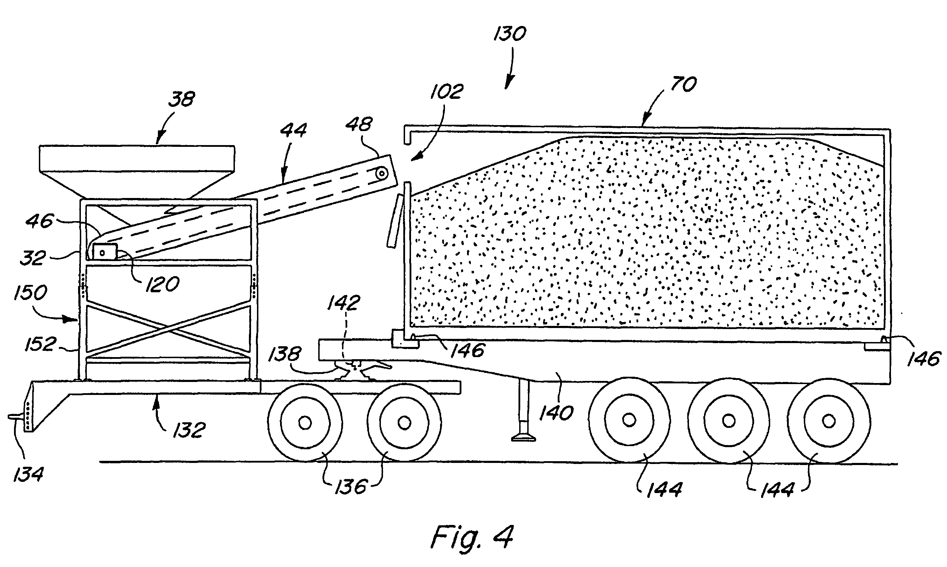

An alternative embodiment of the apparatus is shown in Fig. 4 and designated generally at 130. Apparatus 130 has a front chassis portion 132 with a tongue 134 to couple the apparatus to an agricultural tractor for pulling the apparatus in a field. A pair of rear axles having wheels 136 supports the front chassis portion 132. A fifth wheel trailer hitch 138 is located generally above the rear wheels 136.

A rear chassis portion 140 includes a kingpin 142 for coupling the rear chassis portion to the fifth wheel hitch 138. The rear chassis portion 140 is preferably a standard container chassis; i.e. a single-purpose semitrailer designed to cany a freight container. The rear chassis portion 140 has a plurality of rear axles with wheels 144. The chassis 140 is equipped with standard twist lock pins 146 to enable the chassis 140 to lock a freight container 70 in place. The rear chassis portion 140 may have additional axles if needed to support the load of a full container. The container 70 is placed on the chassis 140 with the fill opening 102 at the nose end of the container adjacent to the conveyor distal end 48. As described above, the container can also be tumed around with the rear doors opened, and a bulkhead placed inside the container for filling and holding grain.

The hopper 38 and conveyor 44 are identical to that described above in connection with the apparatus 10. The hopper and conveyor are supported on a sub-frame 150 that includes a lower portion 152 and an upper portion 32. The upper frame portion 32 is identical to the sub-frame upper portion 32 described above with the apparatus 10. The conveyor is driven by hydraulic motor 120. The motor may be supplied with fluid power from the tractor or the apparatus may include a hydraulic pump driven by the tractor PTO, a separate engine, etc.

The apparatus 130 does not include lift arms for handling the container 70. The container 70 remains on the rear chassis portion 140 while the container is transported into and out of the field. Once the full container has been moved from the field, the rear chassis portion 140 is unhitched from the front chassis portion 132. The front chassis portion 132 couples to another rear chassis portion 140 carrying an empty container 70. The apparatus 130 then returns to the field with the empty container. The rear chassis portion 140 with the full container 70 is transported from the area by a highway semi-tractor and can be transported at highway speeds. At the destination, readily available container handling equipment is used to remove the full container from the chassis 140 and place an empty container on the chassis, for return to the field. The apparatus 130 avoids the need for containers to be handled, i.e. loaded and unloaded from the apparatus, at the farm site. The container handling operations are centralized at the grain elevator, processor, etc. where container handlers can be used more efficiently to handle containers from multiple farms. If the field is close enough to the delivery destination, the agricultural tractor can transport full containers there.

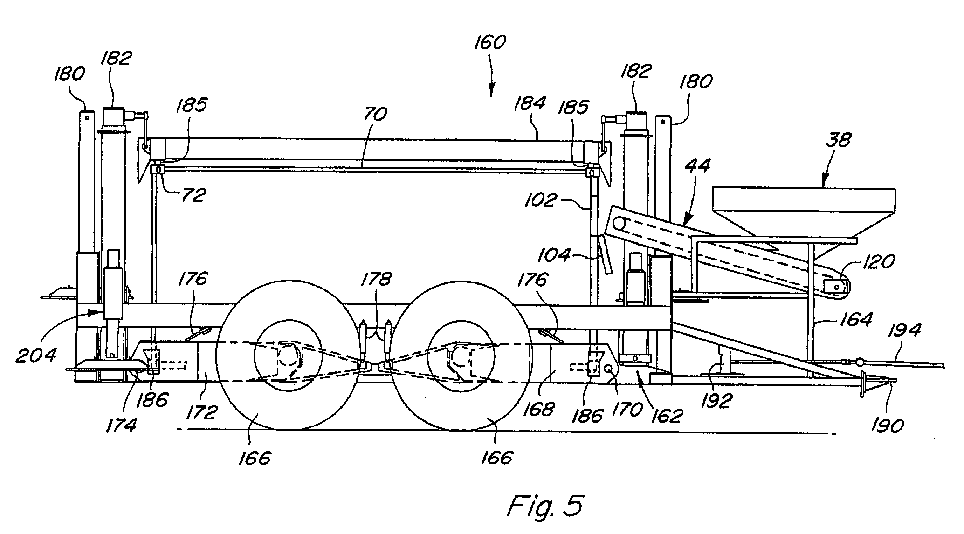

With reference to Figures 5-9, a further alternative embodiment of the apparatus of the present invention is shown, and designated generally at 160. The apparatus 160 has a chassis 162 with a sub-frame 164 that carries the hopper 38 and conveyor 44. The apparatus 160 is similar to the apparatus 10, however, the apparatus 160 is equipped with larger wheels and tires 166 for improved handling in an agricultural field. Due to the larger size of the tires, the tires are located outboard of the container 70 rather than beneath the container as with the apparatus 10. A pair of wheels 166 is provided on each side of the apparatus. Pivotally mounted front swing arms 168 mount each front wheel 166 to the chassis at pivots 170. Pivotally mounted rear swing arms 172 mount each rear wheel 166 to the chassis at pivots 174. Air springs 176 and shock absorbers 178 suspend the front and rear swing arms.

The apparatus 160 includes stabilizer arms 180 and side lift arms 182. The lift arms 182 carry a lift frame 184. The lift frame 184 is similar to a container spreader used in container handling equipment and includes twist-lock pins 185 that engage the container top corner fittings 72 for lifting the container 70. Examples of spreaders are shown in US patents 4,396,218; 4,402,543 and 5,370,435. The lift frame 184 differs from a conventional container spreader in that it has a fixed length to fit one size of container. If desired, the apparatus of the present invention can be made with a spreader chassis to adapt to containers of different lengths.

When the container is loaded onto the apparatus 160, the container is placed on support brackets 186 at each of the container bottom corner fittings. As with the previous embodiments, the apparatus fills a container 70 through a fill opening 102 at the container nose end, adjacent the conveyor 44. The chassis 162 has a front tongue 190 for coupling the apparatus to a towing vehicle, such as an agricultural tractor. In addition, a hydraulic pump 192 is provided to drive the stabilizer arms 180, lift arms 182 and the motor 120. The pump 192 is driven by the tractor PTO through a shaft 194. Alternatively, an engine carried on the chassis 162 can drive the pump 192. An engine can also be mounted on the apparatus 10 for driving the hydraulic pump and air compressor.

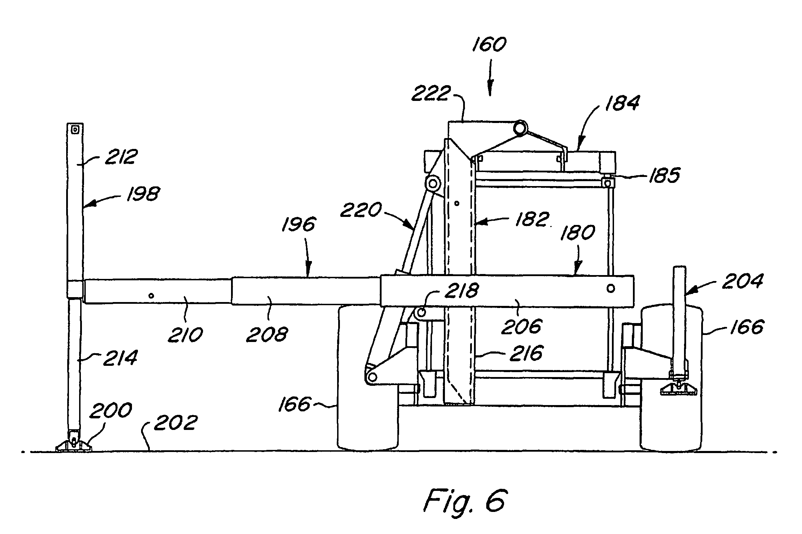

With reference to Figure 6, the stabilizer arms 180 are shown in an extended position. The stabilizer arms 180 have a laterally telescoping arm 196 and a vertically telescoping arm 198 at the outer end of the arm 196. A footpad 200 is mounted to the lower end of the arm 198 to engage the ground 202. The arm 196 can telescope over a flatbed trailer that is receiving or delivering a container. The arm 196 has an outer tube 206, a first telescoping tube 208 and a second telescoping tube 210 that carries the vertical arm 198. The vertical arm 198 has an outer tube 212 and a telescoping tube 214. The telescoping tubes are hydraulically controlled in a conventional manner. A secondary stabilizer 204 is provided on the opposite side of the apparatus.

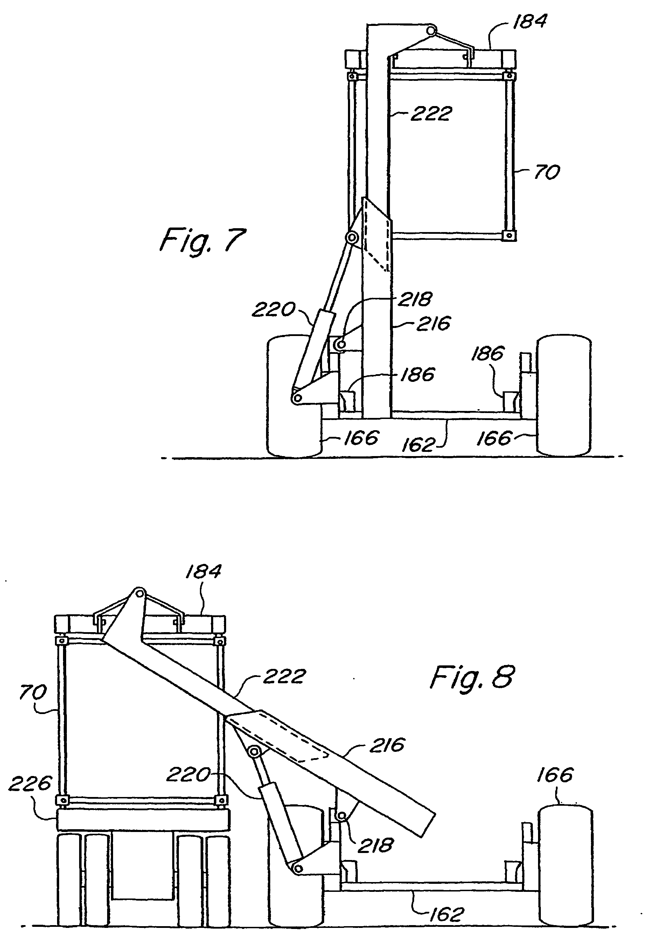

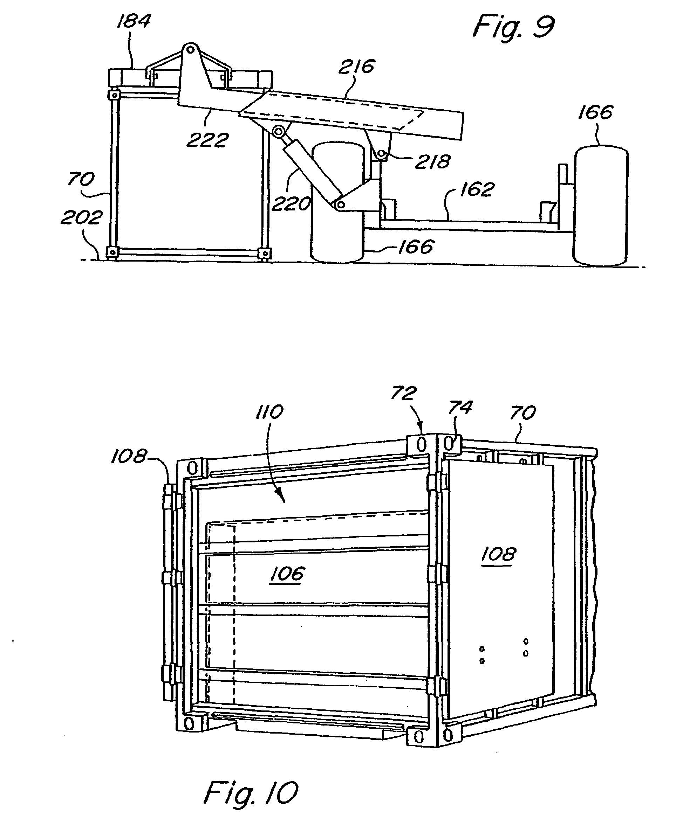

The lift arms 182 each have an outer portion 216 rotatably mounted to the chassis at a pivot 218. For each lift arm, a hydraulic cylinder and rod 220 controls the rotation of the lift arm about the pivot 218. A telescoping inner tube 222 extends from each outer tube 216 and carries the lift frame 184. Figures 7, 8 and 9 illustrate a progression of a container 70 being removed from the apparatus 160. The stabilizer arm 180 has been deleted from Figs. 7-9 for purposes of clarity. In Figure 7, the lift arms are vertically extended to raise the container 70. The container must be raised first, to lift the container 70 over the tires 166. After the container is raised, the lift arms 182 are rotated to move the container laterally to the side. Figure 8 shows the container 70 lowered onto a highway transport semitrailer 226. Alternatively, as shown in Figure 9, the container 70 can be lowered to the ground 202. Both the apparatus 160 and apparatus 10 are capable of loading containers from the ground or from a trailer onto the apparatus for transport of the empty container into the field for filling. The filled container is subsequently carried from the field and placed on the ground or onto an awaiting trailer. Alternatively, the apparatus 160 can transport the container to a location remote from the field where the container is unloaded.

A further alternative embodiment of the present apparatus is shown and designated at 228 in Figure 11. The apparatus 228 is identical to the apparatus 160 except for the provision of a track undercarriage 230 in place of the wheels 166. The track undercarriage provides an endless track 232 supported on end wheels 234 and a plurality of mid-rollers 236. The undercarriage 230 is mounted to the chassis 238. The track undercarriage provides greater load distribution for use in a field. In addition, the undercarriage 230 is beneath the chassis 238 and container 70 instead of laterally outboard as are the wheels 166. With the track undercarriage, the apparatus 228 is narrower that the apparatus 160.

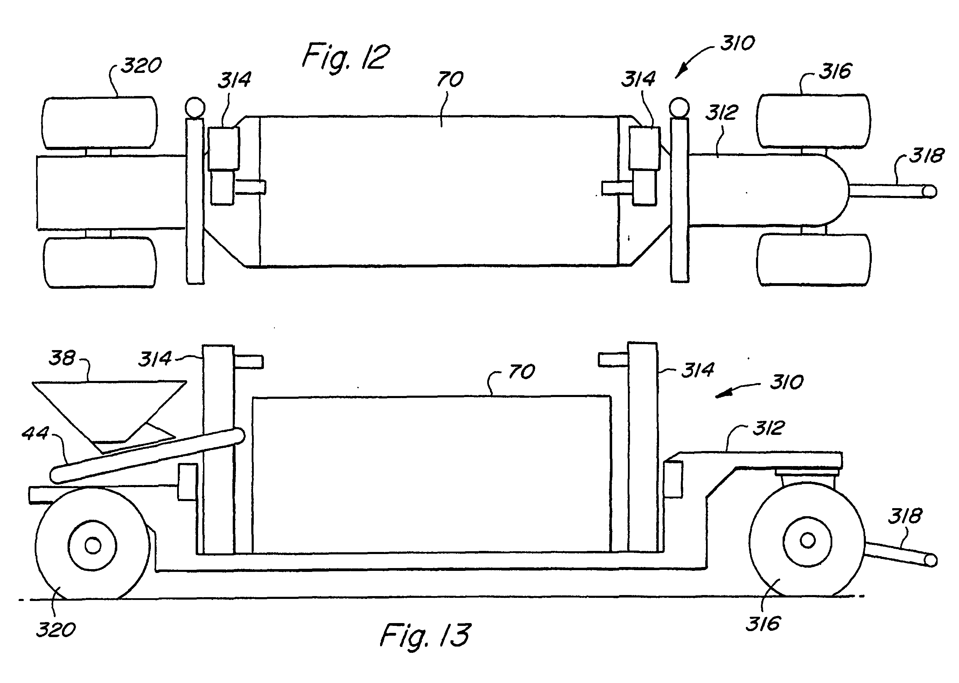

With reference to Figures 12 and 13, an alternative embodiment is shown schematically and designated generally at 310. The apparatus 310 includes a wheeled chassis 312 shown with a container 70 thereon. The chassis has side lift arms 314 to load and unload the container 70 from the chassis 312. A front axle and wheel assembly 316 is pivotally mounted to the chassis and serves as a steering axle. A tongue 318 coupled to the front axle and wheel assembly couples the apparatus 310 to a towing vehicle. A rear axle and wheel assembly 320 is provided at the rear of the apparatus. A hopper 38 and conveyor 44 are mounted to the chassis in the same manner described above for feeding material into the container 70. The apparatus 310 positions the front axle and wheel assembly 316 forward of the container 70 and a rear axle and wheel assembly 320 behind the container 70. This allows the use of large tires for improved mobility in a field while minimizing the width of the apparatus.

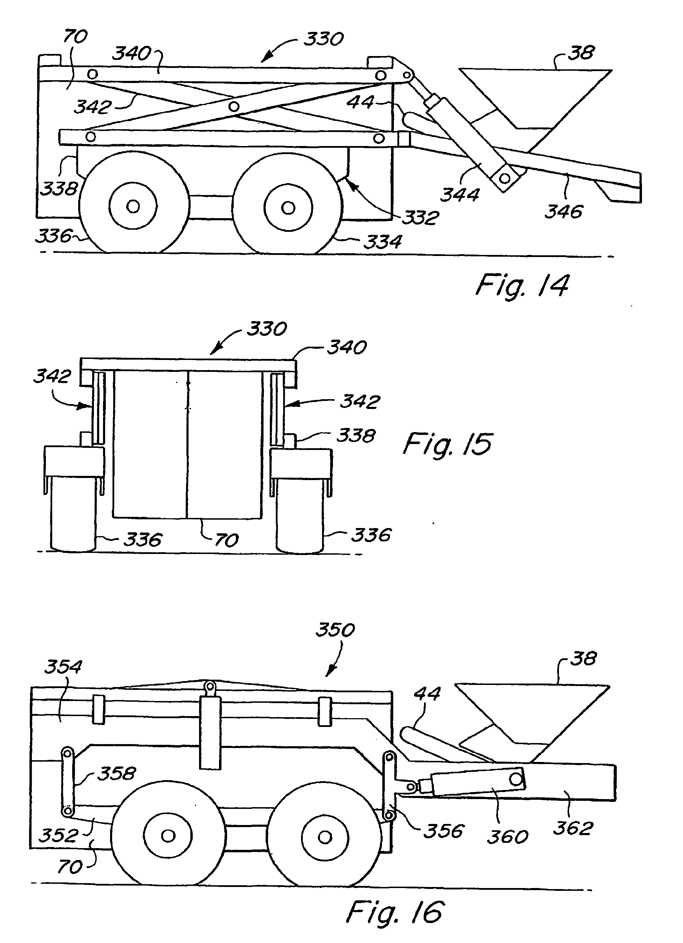

A further alternative embodiment is shown in Figures 14 and 15 and designated generally at 330. Apparatus 330 includes a wheeled chassis 332 having wheels 334 and 336. The chassis has a lower portion 338 and an upper portion 340. The upper portion 340 forms a lift frame having twist-lock pins for coupling to the container top corner fittings. A scissors linkage 342 on the lateral sides of the apparatus connects the upper and lower chassis portions. The scissors linkage is controlled by a hydraulic cylinder 344 coupled between the upper chassis portion and the tongue 346 of the lower chassis portion. The linkage 342 allows the container to be picked-up from the ground and raised to a height sufficient to place the container on a semi-trailer by straddling the trailer with the apparatus 330. The apparatus 330 is shown in a working height position. The scissors linkage can be extended from the shown position to place the container on a trailer, or the linkage can be collapsed to lower a container to the ground.

The apparatus 350 of Figure 16 is similar to the apparatus 330. Here, the chassis lower portion 352 is connected to the chassis upper portion 354 by links 356, 358 that form a four-bar linkage. The linkage is controlled by cylinder 360 connected to the tongue portion 362 of the chassis. Both apparatuses 330 and 350 straddle the container 70. Telescoping arms can also be used to raise and lower the upper chassis portion in place of the linkages shown in Figs. 14-16.

The apparatus has been shown in figure 1 with lift arms and chains engaging the bottom corner fittings of the container. In Figure 5 lift arms are used in conjunction with a lift frame to engage the top corner fittings. In any embodiment of the invention having lift arms, either chains or a lift frame can be used to engage the container. Likewise, load cells can be used in any embodiment to weigh the container and contents.

The apparatus provides the grain producer with means to readily fill freight containers at the point of harvest, directly from a combine or other harvesting machine. With the use of the apparatus, greater utilization of intermodal shipping containers for the transport of grains and other agricultural crops can be achieved.

## Claims

1. A harvesting method comprising the steps of:
harvesting a crop in a field with a harvesting machine having an unloading conveyor (122) for unloading the crop from the harvesting machine;
moving an intermodal freight container (70) through the field and adjacent to the harvesting machine;
unloading the crop from the harvesting machine and depositing the crop in the freight container (70); and
subsequently moving the container (70) from the field,
**characterized in that** the container (70) is moved through the field on a container transport and fill apparatus (10, 130, 160, 228, 310, 330, 350) having a hopper (38) for receiving crop from the harvesting machine and a conveyor (44) for moving the crop from the hopper (38) and into the container (70).

2. The harvesting method as defined by claim 1 wherein during the unloading step the harvesting machine continues to move through the field harvesting the crop and the container (70) is moved along with the harvesting machine.

3. The harvesting method as defined by claim 1 or 2 further comprising the step of monitoring the quantity of crop in the freight container (70) while the container (70) is being filled.

4. The harvesting method as defined by claim 3 wherein the quantity of crop in the container (70) is monitored by weighing the container as the container (70) is being filled.

5. The harvesting method as defined by one of claims 1 to 4 wherein the container transport and fill apparatus (10, 130, 160, 228, 310, 330, 350) has a means for loading and unloading containers onto and from the transport and fill apparatus and further comprising the step of loading empty containers onto the apparatus and subsequently unloading filled containers from the apparatus.

## Patentansprüche

1. Ernteverfahren mit den folgenden Schritten:
Ernten eines Ernteguts in einem Feld mit einer Erntemaschine, die einen Entladeförderer (122) zum Entladen des Ernteguts von der Erntemaschine aufweist;
Bewegen eines Intermodal-Frachtcontainers (70) durch das Feld und neben die Erntemaschine;
Entladen des Ernteguts von der Erntemaschine und Ablegen des Ernteguts in den Frachtcontainer (70); und
anschließend Bewegen des Containers (70) von dem Feld,
**dadurch gekennzeichnet, dass** der Container (70) auf einer Containertransport- und -füllvorrichtung (10, 130, 160, 228, 310, 330, 350) mit einem Trichter (38) zur Aufnahme von Erntegut von der Erntemaschine und einem Förderer (44) zum Bewegen des Ernteguts aus dem Trichter (38) und in den Container (70) durch das Feld bewegt wird.

2. Ernteverfahren nach Anspruch 1, bei dem sich die Erntemaschine während des Entladeschritts weiter durch das Feld bewegt und das Erntegut erntet und der Container (70) zusammen mit der Erntemaschine bewegt wird.

3. Ernteverfahren nach Anspruch 1 oder 2, weiterhin mit dem Schritt des Überwachens der Erntegutmenge im Frachtcontainer (70), während der Container (70) gefüllt wird.

4. Ernteverfahren nach Anspruch 3, bei dem die Erntegutmenge im Container (70) durch Wiegen des Containers, während der Container (70) gefüllt wird, überwacht wird.

5. Ernteverfahren nach einem der Ansprüche 1 bis 4, bei dem die Containertransport- und -füllvorrichtung (10, 130, 160, 228, 310, 330, 350) ein Mittel zum Laden und Entladen von Containern auf die und von der Containertransport- und -füllvorrichtung aufweist, und weiterhin mit dem Schritt des Ladens leerer Container auf die Vorrichtung und anschließendem Entladen gefüllter Container von der Vorrichtung.

## Revendications

1. Procédé de récolte comprenant les étapes consistant à :
récolter une récolte dans un champ avec une machine de récolte ayant un convoyeur de déchargement (122) pour décharger la récolte de la machine de récolte ;
déplacer un conteneur intermodal (70) dans le champ et de manière adjacente à la machine de récolte ;
décharger la récolte de la machine de récolte et déposer la récolte dans un conteneur (70) ; et
déplacer ensuite le conteneur (70) du champ,
**caractérisé en ce que** le conteneur (70) est déplacé dans le champ sur un appareil de transport et de remplissage de conteneur (10, 130, 160, 228, 310, 330, 350) ayant une trémie (38) pour recevoir la récolte de la machine de récolte et un convoyeur (44) pour déplacer la récolte de la trémie (38) et dans le conteneur (70).

2. Procédé de récolte selon la revendication 1, dans lequel pendant l'étape de déchargement, la machine de récolte continue à se déplacer dans le champ en récoltant la récolte et le conteneur (70) est déplacé conjointement à la machine de récolte.

3. Procédé de récolte selon la revendication 1 ou 2, comprenant en outre l'étape consistant à surveiller la quantité de récolte dans le conteneur (70) alors que le conteneur (70) est rempli.

4. Procédé de récolte selon la revendication 3, dans lequel la quantité de récolte dans le conteneur (70) est surveillée en pesant le conteneur, lorsque le conteneur (70) est rempli.

5. Procédé de récolte selon l'une quelconque des revendications 1 à 4, dans lequel l'appareil de transport et de remplissage de conteneur (10, 130, 160, 228, 310, 330, 350) possède des moyens pour charger et décharger les conteneurs sur et de l'appareil de transport et de remplissage, et comprenant en outre l'étape consistant à charger des conteneurs vides sur l'appareil et ensuite à décharger les conteneurs pleins de l'appareil.
